# EUROPEAN PATENT APPLICATION

(11) **EP 3 021 143 A1**
(43) Date of publication of application: **18.05.2016**
(21) Application number: 14822155.9
(22) Date of filing: 11.06.2014
(51) Int. Cl.: G02B 3/14

(54) **ELECTROHYDRODYNAMIC LIQUID LENS**

(30) Priority: 11.07.2013 KR 20130081705
(71) Applicant: Postech Academy-Industry Foundation, Nam-gu Pohang-si, Gyeongsangbuk-do 37673 (KR)
(72) Inventor: KIM, Dong Sung, Gyeongsangbuk-do 37673 (KR); KIM, Wonkyoung, Pohang-si Gyeongsangbuk-do 37673 (KR); LA, Moonwoo, Pohang-si Gyeongsangbuk-do 37673 (KR)
(74) Representative: Potter Clarkson LLP
(86) International application number: PCT/KR2014/005121
(87) International publication number: WO 2015/005591

(57) **Abstract**

A variable focus liquid lens using an electrohydrodynamic flow of a fluid is provided. The electrohydrodynamic liquid lens includes: a housing that forms a flow channel of a ring shape therein; a first liquid that occupies a portion of the flow channel; a second liquid that occupies the remaining portion of the flow channel and that maintains a separation state from the first liquid; and a control electrode that contacts the first liquid in the flow channel. At an interface in which the first liquid and the second liquid contact, a curvature is formed to function as a lens, and the control electrode causes an electrohydrodynamic flow of the first liquid, thereby changing a location of the interface.

## Description

### [Technical Field]

The present invention relates to a microlens. More particularly, the present invention relates to a variable focus liquid lens using electrohydrodynamic flow of a fluid.

### [Background Art]

In a portable electronic device such as a smart phone or medical equipment such as an endoscope, in order to obtain high image quality of a picture or a moving picture, a lens having a small size and high quality is essentially required. Particularly, in order to automatically adjust a focus or perform an enlarging function, a focal length of a lens should be actively changed.

Because a solid lens that is made of glass or plastic has a predetermined focal length, the solid lens changes a focal length with a method of arranging several solid lenses and changing a distance between lenses. In this case, a motor is used in order to move the lens, but the motor makes down-sizing of a system difficult and causes noise and vibration.

Nowadays, research on microlens development is being performed with a membrane method and an electrowetting method.

The membrane method is a method of adjusting a focal length by changing a shape of a transparent and flexible membrane such as silicon rubber using pneumatic pressure, electromagnetic force, and a piezoelectric element, and can easily adjust a focal length. However, in order to maintain a desired focal length, energy should be continuously provided, and after the lens is used for a long time, transparency of a membrane is lost or a contraction/relaxation ability is deteriorated by plastic deformation.

The electrowetting method is a method of adjusting a focal length by changing a contact angle to a solid surface by applying a voltage to a waterdrop that is put at a solid surface, and can quickly change a shape of the waterdrop. However, the electrowetting method requires a complex and expensive process such as production of an insulating layer and a hydrophobic surface between a waterdrop and an electrode. Further, because an electrowetting phenomenon occurs only in an aqueous solution, there is a limitation in selecting an operation liquid.

### [DISCLOSURE]

### [Technical Problem]

The present invention has been made in an effort to provide an electrohydrodynamic liquid lens having advantages of having a simple structure, being capable of being simply produced, and being capable of solving a drawback of a membrane method and an electrowetting method.

### [Technical Solution]

An exemplary embodiment of the present invention provides an electrohydrodynamic liquid lens including: a housing that forms a flow channel of a ring shape therein; a first liquid that occupies a portion of the flow channel; a second liquid that occupies the remaining portion of the flow channel and that maintains a separation state from the first liquid; and a control electrode that contacts the first liquid in the flow channel. At an interface in which the first liquid and the second liquid contact, a curvature is formed to function as a lens, and the control electrode causes an electrohydrodynamic flow of the first liquid to change a location of the interface.

Wettability of the first liquid to the housing surface may be different from that of the second liquid, and a curvature of the interface may increase as a wettability difference between the first liquid and the second liquid increases.

The control electrode may include first and second driving electrodes that are located in parallel in a length direction of the flow channel and a pair of ground electrodes that are located in parallel in a width direction of the flow channel between the first and second driving electrodes. The first and second driving electrodes and the pair of ground electrodes may be disposed in a quadrangle.

Any one driving electrode of the first and second driving electrodes may receive application of a DC or AC voltage, and the other driving electrode may maintain a floating state. An electrohydrodynamic flow of the first liquid may occur from a driving electrode in which a voltage is applied toward a driving electrode of a floating state.

The flow channel may be formed in a quadrangular ring shape. The first liquid may occupy a half of the flow channel, and the second liquid may occupy the remaining portion of the flow channel.

The flow channel may include a pair of first flow channels at which the interface is located. The pair of first flow channels may have a constant cross-sectional area in a length direction. The pair of first flow channels may have a changing cross-sectional area in a length direction. A venturi passage may be formed at the pair of first flow channels.

A hydrophobic surface and a hydrophilic surface may be formed at a wall surface of at least one first flow channel of the pair of first flow channels. The hydrophobic surface and the hydrophilic surface may form a hydrophobic gradient of wettability and a hydrophilic gradient of wettability, respectively, in a length direction of the first flow channel.

The flow channels may include at least three first flow channels in parallel and having the same length, and an interface may be located at each of the first flow channels. At least one first flow channel of the first flow channels may have a changing cross-sectional area in a length direction.

The first liquid may include an insulating oil. The second liquid may include any one of mineral oil, water, methanol, ethanol, isopropyl alcohol, and acetone. A density of the first liquid may be the same as that of the second liquid.

### [Advantageous Effects]

In a liquid lens of the present exemplary embodiment, an insulating oil is used as an operation liquid, and a location of an interface is changed using an electrohydrodynamic flow. By using insulating oil, power consumption is reduced, while in an extreme situation, a liquid lens can stably operate, and an operation liquid has a wide selection width. By using an electrohydrodynamic flow, a component such as a motor or a membrane is not required and therefore an entire structure of a liquid lens can be simplified and the liquid lens can be simply produced.

### [Description of the Drawings]

FIG. 1 is a perspective view of a liquid lens according to a first exemplary embodiment of the present invention.
FIG. 2 is a partial enlarged view of the liquid lens of FIG. 1.
FIGS. 3 and 4 are front views of the liquid lens of FIG. 1.
FIG. 5 is a front view of a liquid lens according to a second exemplary embodiment of the present invention.
FIG. 6 is a diagram illustrating a simulation image of a liquid lens according to a second exemplary embodiment of the present invention.
FIG. 7 is a front view of a liquid lens according to a third exemplary embodiment of the present invention.
FIG. 8 is a diagram illustrating a simulation image of a liquid lens according to a third exemplary embodiment of the present invention.
FIG. 9 is a front view of a liquid lens according to a fourth exemplary embodiment of the present invention.
FIG. 10 is a front view of a liquid lens according to a fifth exemplary embodiment of the present invention.
FIG. 11 is a front view of a liquid lens according to a sixth exemplary embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

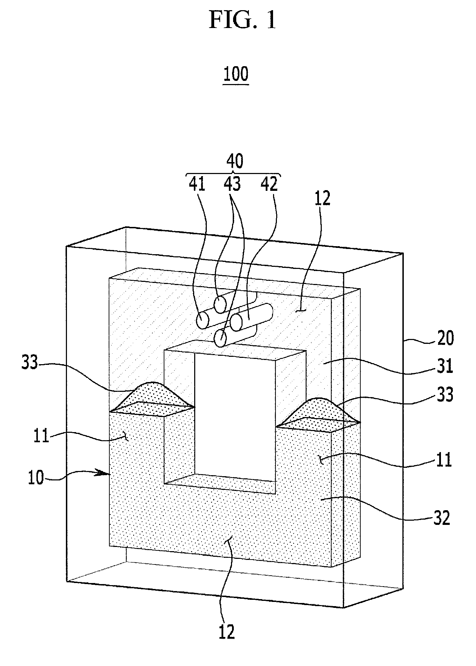

FIG. 1 is a perspective view of an electrohydrodynamic liquid lens (hereinafter, for convenience, referred to as a 'liquid lens') according to a first exemplary embodiment of the present invention.

Referring to FIG. 1, a liquid lens 100 of the first exemplary embodiment includes a housing 20 that forms a flow channel 10 therein, a first liquid 31 that occupies a portion of the flow channel 10, a second liquid 32 that occupies the remaining portion of the flow channel 10, and a control electrode 40 that contacts the first liquid 31 in the flow channel 10. The first liquid 31 and the second liquid 32 maintain a separated state instead of being mixed, and an interface 33 of the first liquid 31 and the second liquid 32 functions as a lens.

The housing 20 may be made of glass or plastic, and the entire housing 20 may be transparently formed or a portion of the housing 20 corresponding to a path of light that passes through the lens may be transparently formed. The flow channel 10 within the housing 20 is a ring-shaped circulation type of flow channel. The flow channel 10 does not communicate with the outside of the housing 20, and may be formed in a quadrangular ring shape.

The first liquid 31 may occupy a half of the flow channel 10, and the second liquid 32 may occupy the remaining half of the flow channel 10. Wettability of the first liquid 31 to a surface of the housing 20 is different from that of the second liquid 32 to a surface of the housing 20. Due to such a wettability difference, at the interface 33 in which the first liquid 31 and the second liquid 32 contact, a curvature is formed to function as a lens.

When wettability of the first liquid 31 to a surface of the housing 20 is higher than that of the second liquid 32 to a surface of the housing 20, the interface 33 of the first liquid 31 and the second liquid 32 forms a convex curved surface toward the first liquid 31. In contrast, when wettability of the first liquid 31 to a surface of the housing 20 is lower than that of the second liquid 32 to a surface of the housing 20, the interface 33 of the first liquid 31 and the second liquid 32 forms a convex curved surface toward the second liquid 32. FIG. 1 illustrates a first case.

As a difference between wettability of the first liquid 31 and wettability of the second liquid 32 to a surface of the housing 20 increases, a curvature of the interface 33 may be increased. As the first liquid 31, an oil having very low electrical conductivity may be used, and as the second liquid 32, a liquid that is not mixed with the first liquid 31 and that forms the interface 33 may be used. The first liquid 31 may be referred to as an insulating liquid or insulating oil.

The flow channel 10 of the housing 20 is formed with a pair of first flow channels 11 in which an interface of the first liquid 31 and the second liquid 32 is located and a pair of second flow channels 12 that connect the pair of first flow channels 11. The first flow channel 11 is formed in a straight line to enable the interface 33 operating as a lens to move along a straight line path. A cross-section of the flow channel 10 may be formed as a quadrangle or a circle.

The control electrode 40 is located at the second flow channel 12 that is filled with the first liquid 31 in a pair of second flow channels 12. The control electrode 40 includes first and second driving electrodes 41 and 42 that are located in parallel in a length direction (horizontal direction of the drawing) of the second flow channel 12, and a pair of ground electrodes 43 that are located in parallel in a width direction (vertical direction of the drawing) of the second flow channel 12 between the first and second driving electrodes 41 and 42. The first and second driving electrodes 41 and 42 and the pair of ground electrodes 43 are disposed in a quadrangle.

In a driving process of the liquid lens 100 of the first exemplary embodiment, either one of the first and second driving electrodes 41 and 42 receives application of a DC or AC voltage, and the other one thereof maintains a floating state. A flow direction of the first liquid 31 is determined according to whether either driving electrode of the first and second driving electrodes 41 and 42 receives application of a DC or AC voltage.

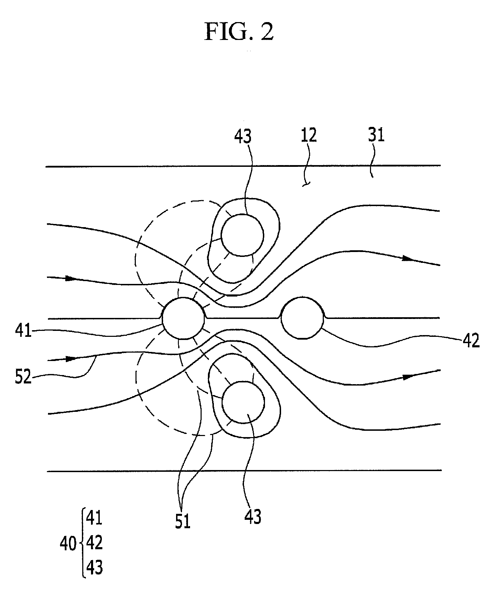

FIG. 2 is a partial enlarged view of the liquid lens of FIG. 1, and an occurrence principle of a flow will be described with reference to FIG. 2.

Referring to FIG. 2, it is assumed that a high voltage is applied to the first driving electrode 41 and that the second driving electrode 42 is in a floating state. The pair of ground electrodes 43 maintain a ground state.

Due to voltage application to the first driving electrode 41, a non-uniform electric field is formed between the first driving electrode 41 and the pair of ground electrodes 43. A non-uniform electric field forms an electrical conductivity gradient of the first liquid 31 by an Onsager effect, and an electrical conductivity gradient induces free charge generation within the first liquid 31 by a Maxwell-Wagner polarization phenomenon. Free charges transfer momentum to a peripheral fluid (first liquid) while moving with an influence of an electric force to cause a flow of the first liquid 31.

In FIG. 2, reference numeral 51 denotes an electrical field distribution that is formed at a periphery of the control electrode 40, and reference numeral 52 denotes a flow field distribution of the first liquid 31. In FIG. 2, because the first driving electrode 41 and the pair of ground electrodes 43 are laterally asymmetrically disposed, an electrohydrodynamic flow occurs in a horizontal direction (length direction of the second flow channel 12).

When a negative voltage is applied to the first driving electrode 41, the opposite free charges are induced, and a direction of an electric field is changed and thus the same electric force as that when a positive voltage is applied to the first driving electrode 41 operates. Therefore, even if an AC voltage is applied to the first driving electrode 41, a flow continues to constantly occur from the left to the right.

In this case, the first and second driving electrodes 41 and 42 and a pair of ground electrodes 43 are formed in a cylindrical shape, and thus when the first liquid 31 moves, flow velocity resistance is reduced.

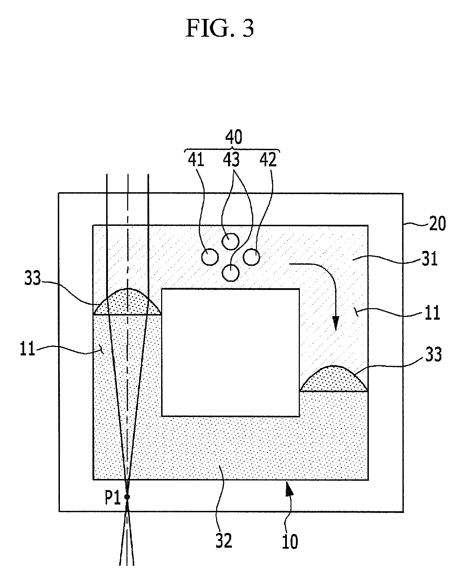

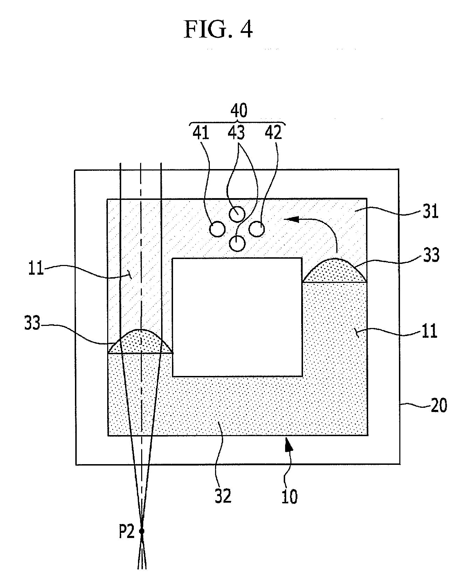

FIGS. 3 and 4 are front views of the liquid lens of FIG. 1.

In FIG. 3, the first driving electrode 41 receives application of a high voltage, and the second driving electrode 42 maintains a floating state. Accordingly, the first liquid 31 moves in an advancing direction (clockwise direction in the drawing) from the first driving electrode 41 toward the second driving electrode 42. Thereby, the interface 33 of the left first flow channel 11 moves upward, and the interface 33 of the right first flow channel 11 moves downward.

In FIG. 4, the second driving electrode 42 receives application of a high voltage and the first driving electrode 41 maintains a floating state. Accordingly, the first liquid 31 moves in an advancing direction (clockwise direction in the drawing) from the second driving electrode 42 toward the first driving electrode 41. Thereby, the interface 33 of the left first flow channel 11 moves downward, and the interface 33 of the right first flow channel 11 moves upward.

In FIGS. 3 and 4, light that is applied from the outside of the housing 20 to the interface 33 is refracted and focused while passing through the interface 33. In FIG. 3, light that is passed through the interface 33 of the left first flow channel 11 is focused at a point P1, and in FIG. 4, light that is passed through the interface 33 of the left first flow channel 11 is focused at a point P2. In FIGS. 3 and 4, a focal length of the lens (distance between the center of the lens and a focus point) is the same.

In this way, by adjusting a flow direction of the first liquid 31, a focus point of the lens may be moved from P1 to P2 or from P2 to P1. That is, by moving the interface 33 according to voltage application of the first and second driving electrodes 41 and 42 while using the interface 33 of the first liquid 31 and the second liquid 32 as a lens, the liquid lens 100 of the first exemplary embodiment may change a focus point.

After moving the interface 33 by a flow of the first liquid 31, when stopping voltage application of the first driving electrode 41 or the second driving electrode 42, a flow no longer occurs and the interface 33 stops at the location. Therefore, it is unnecessary to continuously provide energy in order to maintain a desired focus point.

In an operation process of the liquid lens 100, when an amplitude of a voltage is increased, a flow velocity increases, and when a frequency of an AC voltage is increased, a flow velocity decreases. By adjusting an amplitude of a voltage that is applied to the first driving electrode 41 or the second driving electrode 42 or a frequency of an AC voltage, a flow velocity of the first liquid 31 (i.e., a moving speed of the interface 33 operating as a lens) may be accurately controlled.

A voltage that is applied to the first driving electrode 41 or the second driving electrode 42 may be in a range of approximately 1 V to 10,000 V in a DC voltage and may be in a range of approximately 0.1 Hz to 1000 Hz and 1 Vrms to 10,000 Vrms in an AC voltage. A voltage may be variously changed according to a size and gap of the control electrode 40.

As the first liquid 31 that moves by contacting the control electrode 40, a liquid in which an additive such as sorbitan trioleate, which is ionic surfactant, sodium di-2-ethylhexyl sulfossuccinate, which is non-ionic surfactant sodium, or tetrabutylammonium tetrabutylborate, which is oil fusible salt is added at 0.1 wt% to 10 wt% to an insulating oil such as silicon oil, dodecane, or toluene may be used.

As the second liquid 32, a liquid, for example mineral oil, water, methanol, ethanol, isopropyl alcohol, and acetone that does not mix with the first liquid 31 and that forms the interface 33 may be used. The first liquid 31 and the second liquid 32 may have the same density. In this case, the foregoing lens function can be implemented regardless of a gravity direction, and even if a voltage is turned off, a location and shape of the interface 33 are not changed and thus power consumption can be reduced.

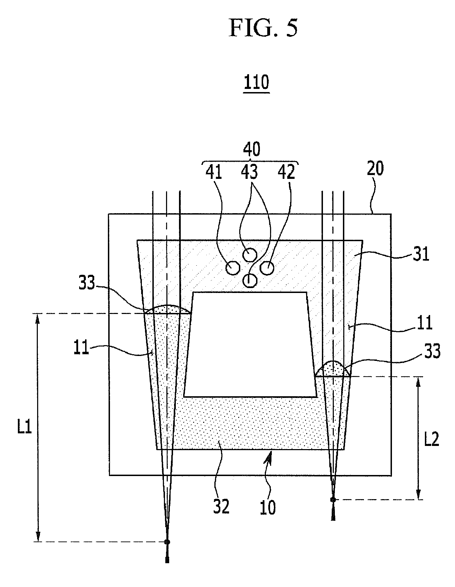

FIG. 5 is a front view of a liquid lens according to a second exemplary embodiment of the present invention.

Referring to FIG. 5, a liquid lens 110 of a second exemplary embodiment has the same configuration as that of the foregoing first exemplary embodiment except that a first flow channel 11 has a variable cross-sectional area. In the second exemplary embodiment, the same reference numerals are used for constituent elements identical to or corresponding to those of the first exemplary embodiment.

A pair of first flow channels 11 at which an interface 33 is located have a gradually changing cross-sectional area in a length direction. FIG. 5 illustrates a case in which the first flow channel 11 becomes narrower when advancing downward.

When an electrohydrodynamic flow occurs in a first liquid 31, the interface 33 of the first liquid 31 and a second liquid 32 moves, and in this case, a curvature of the interface 33 changes according to a location. That is, when the interface 33 is located at a point having a large cross-sectional area in the first flow channel 11, a curvature of the interface 33 decreases and a focal length of the lens that is formed by the interface 33 increases. In contrast, when the interface 33 is located at a point having a small cross-sectional area in the first flow channel 11, a curvature of the interface 33 increases and a focal length of the lens that is formed by the interface 33 decreases.

Two interfaces 33 that are formed within the liquid lens 110 of the second exemplary embodiment may have different curvatures according to a location. In the drawings, a focal length of the left interface 33 is denoted by L1, and a focal length of the right interface 33 is denoted by L2.

In this way, the liquid lens 110 of the second exemplary embodiment changes a curvature of the interface 33 while changing a focus point by a flow of the interface 33, thereby variously adjusting a focal length thereof (i.e., magnification power of the lens). In the liquid lens 100 of the first exemplary embodiment, a moving range (distance between P1 and P2) of a focus point is limited to approximately a length of the first flow channel 11, but in the liquid lens 110 of the second exemplary embodiment, a moving range of a focus point is larger than that of the first exemplary embodiment.

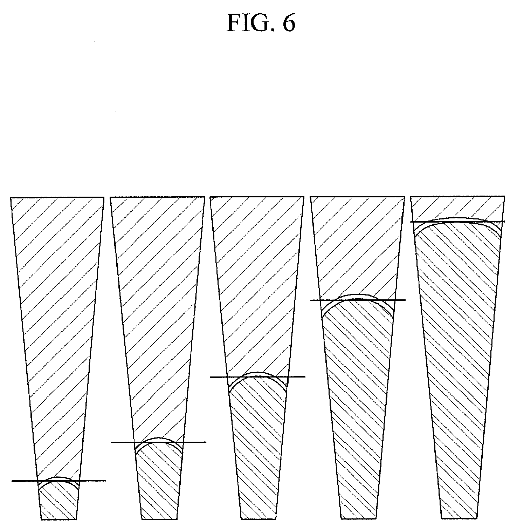

FIG. 6 is a diagram illustrating a simulation image of the liquid lens according to the second exemplary embodiment of the present invention.

Referring to FIG. 6, as an interface of a first liquid and a second liquid is located at a point having a narrow cross-sectional area in a first flow channel, it may be determined that the interface forms a large curvature, and as the interface is located at a wide cross-sectional area, it may be determined that the interface forms a small curvature.

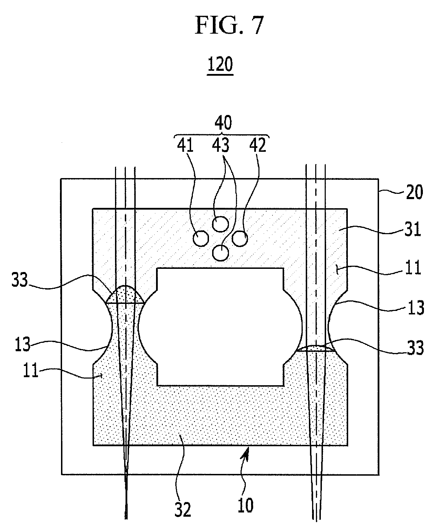

FIG. 7 is a front view of a liquid lens according to a third exemplary embodiment of the present invention.

Referring to FIG. 7, a liquid lens 120 of the third exemplary embodiment has the same configuration as that of the foregoing first exemplary embodiment, except that a venturi passage 13 is formed in a first flow channel 11. In the third exemplary embodiment, the same reference numerals are used for constituent elements identical to or corresponding to those of the first exemplary embodiment.

The venturi passage 13 may be located at the center of the first flow channel 11, and performs an operation of narrowing and widening a cross-sectional area of the first flow channel 11. In the drawings, both sides of the venturi passage 13 may be formed in a circular arc shape.

An interface 33 of a first liquid 31 and a second liquid 32 moves along the first flow channel 11 including the venturi passage 13 by electrohydrodynamic flow of the first liquid 31. Because the interface 33 that is located at the venturi passage 13 has a changing curvature according to a location thereof, a focal length of the lens changes. Two interfaces 33 that are formed within the liquid lens 120 of the third exemplary embodiment may have different curvatures according to a location thereof.

The liquid lens 120 of the third exemplary embodiment can more variously change a focal length thereof by increasing a curvature change of the interface 33 even while shortening a moving distance of the interface 33, compared with the second exemplary embodiment. That is, the liquid lens 120 of the third exemplary embodiment can more variously change a focal length even while further reducing power consumption compared to that of the second exemplary embodiment.

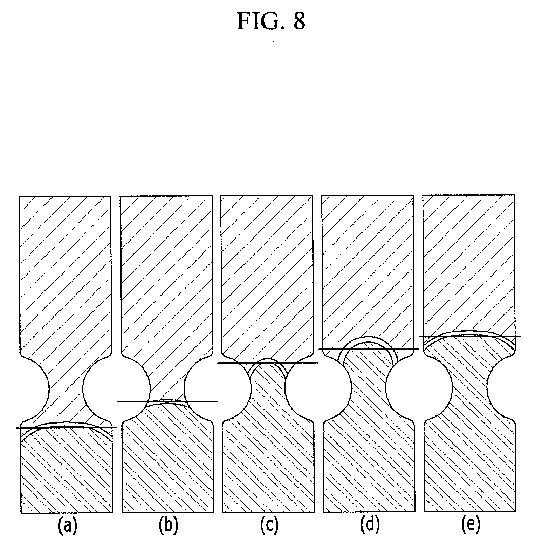

FIG. 8 is a diagram illustrating a simulation image of the liquid lens according to the third exemplary embodiment of the present invention.

Referring to FIG. 8, in a case of FIG. 8(a) and (e) in which an interface of a first liquid and a second liquid is located at the outside of a venturi passage and in a case of FIG. further 8 (b) in which an interface of a first liquid and a second liquid is located at a lower portion of a venturi passage, an interface is formed in a small curvature. In a case of FIGS. 8(c) and (d) in which an interface of a first liquid and a second liquid is located at an upper portion of a venturi passage, an interface is formed in a large curvature.

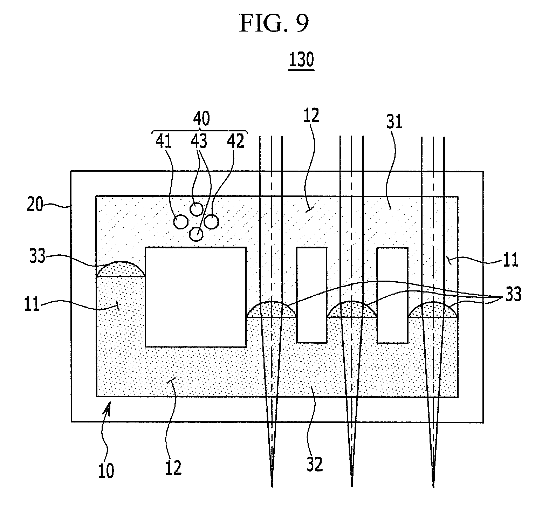

FIG. 9 is a front view of a liquid lens according to a fourth exemplary embodiment of the present invention.

Referring to FIG. 9, a liquid lens 130 of a fourth exemplary embodiment has the same configuration as that of the foregoing first exemplary embodiment except that at least three first flow channels 11 are provided. In the fourth exemplary embodiment, the same reference numerals are used for constituent elements identical to or corresponding to those of the first exemplary embodiment.

A flow channel 10 of the liquid lens 130 of the fourth exemplary embodiment includes at least three first flow channels 11 in which an interface 33 of a first liquid 31 and a second liquid 32 is located, and a pair of second flow channels 12 that connect the first flow channels 11. The first flow channels 11 are parallel and are formed in the same length, and may have a constant cross-sectional area in a length direction. FIG. 9 illustrates four first flow channels 11, but the number of the first flow channels 11 is not limited to the illustrated example.

A control electrode 40 is located at the second flow channel 12 that is filled with the first liquid 31 among a pair of second flow channels 12. At least one of interfaces 33 that are located at the same side as that of the control electrode 40 move together. FIG. 9 illustrates a case in which three interfaces 33 are located at the right side of the control electrode 40 and in which one interface 33 is located at the left side of the control electrode 40. Three interfaces 33 that are located at the right side of the control electrode 40 represent the same flow.

By increasing the number of the first flow channels 11, at least three interfaces 33 may be disposed in parallel. Such a liquid lens 130 of the fourth exemplary embodiment can perform a parallel lens function such as stereoscopic image photography, and enables easy formation of a lens array and thus has excellent expandability.

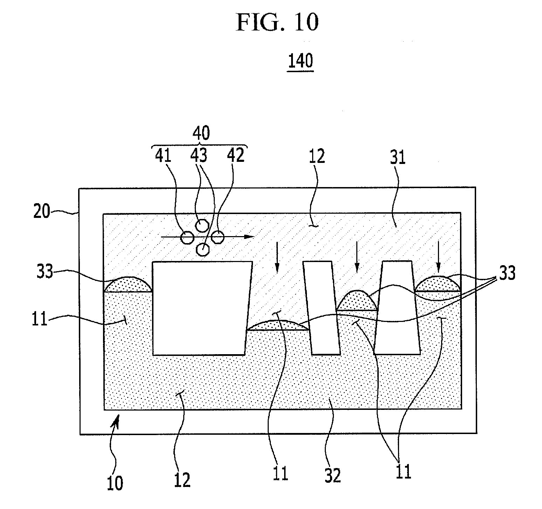

FIG. 10 is a front view of a liquid lens according to a fifth exemplary embodiment of the present invention.

Referring to FIG. 10, a liquid lens 140 of a fifth exemplary embodiment has the same configuration as that of the foregoing fourth exemplary embodiment, except that at least one first flow channel 11 has a variable cross-sectional area. In the fifth exemplary embodiment, the same reference numerals are used for constituent elements identical to or corresponding to those of the fourth exemplary embodiment.

The at least one first flow channel 11 has a gradually changing cross-sectional area in a length direction. FIG. 10 illustrates a case in which three first flow channels 11 that are located at the right side of the control electrode 40 have a variable cross-sectional area.

As an electrohydrodynamic flow occurs at a first liquid 31, when four interfaces 33 move, the interfaces 33 that are located at three first flow channels 11 having a variable cross-sectional area have a changing curvature according to a location and thus a focal length of the lens changes. That is, by changing a curvature of the interface 33 while a focus point changes with a flow of the interface 33, a focal length of the lens can be variously adjusted.

In this case, because an interface that is located adjacent to the control electrode 40 among three interfaces 33 that are located at the right side of the control electrode 40 has small hydrodynamic resistance, a large flow rate occurs at the interface and the interface thus moves a large distance. In contrast, because an interface that is located far apart from the control electrode 40 has large hydrodynamic resistance, a small flow rate occurs at the interface and the interface thus moves a small distance.

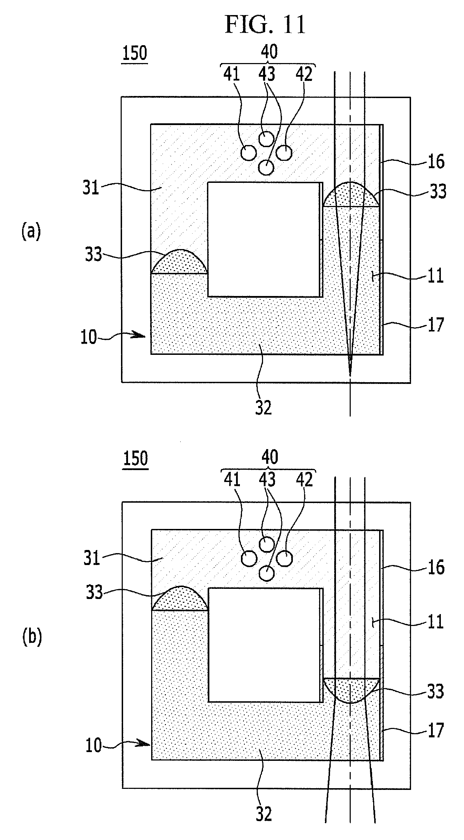

FIG. 11 is a front view of a liquid lens according to a sixth exemplary embodiment of the present invention.

Referring to FIG. 11, a liquid lens 150 of a sixth exemplary embodiment has the same configuration as that of the foregoing first exemplary embodiment, except that a hydrophobic surface 16 and a hydrophilic surface 17 are formed at a wall surface of a first flow channel 11. In the sixth exemplary embodiment, the same reference numerals are used for constituent elements identical to or corresponding to those of the first exemplary embodiment.

In a length direction of the first flow channel 11, at a half of a wall surface of the first flow channel 11, the hydrophobic surface 16 may be formed, and at the remaining half thereof, the hydrophilic surface 17 may be formed. That is, the hydrophobic surface 16 and the hydrophilic surface 17 are vertically symmetric in the drawings. In this case, the hydrophobic surface 16 may be located more adjacent to a control electrode 40 than the hydrophilic surface 17.

When an interface of a first liquid 31 and a second liquid 32 is located at the hydrophobic surface 16, the first liquid 31 spreads over the hydrophobic surface 16 and thus a more upwardly convex interface may be formed. Thereby, by largely forming a curvature of an interface 33, magnification power of the lens can be increased.

In contrast, when an interface of the first liquid 31 and the second liquid 32 is located at the hydrophilic surface 17, the second liquid 32 spreads over the hydrophilic surface 17 and thus a curvature direction of the interface 33 is converted to the contrary. Thereby, the interface 33 that has functioned as a focusing lens at the hydrophobic surface 16 functions as a diverging lens at the hydrophilic surface 17.

In this way, the liquid lens 150 of the sixth exemplary embodiment changes a curvature direction of the interface 33 in a single flow channel, thereby selectively implementing a focusing lens and a diverging lens. FIG. 11 illustrates a case in which the hydrophobic surface 16 and the hydrophilic surface 17 are formed in one first flow channel 11 of a pair of first flow channels 11, but the hydrophobic surface 16 and the hydrophilic surface 17 may be formed in both of a pair of first flow channels 11.

The hydrophobic surface 16 and the hydrophilic surface 17 may form a predetermined gradient of wettability in a length direction of the first flow channel 11. That is, the hydrophobic surface 16 may form a hydrophobic gradient of wettability in which hydrophobicity gradually changes in a length direction of the first flow channel 11, and the hydrophilic surface 17 may form a hydrophilic gradient of wettability in which hydrophilicity gradually changes in a length direction of the first flow channel 11.

For example, the hydrophobic surface 16 may form a decreasing hydrophobic gradient of wettability when receding from the control electrode 40, and the hydrophilic surface 17 may form an increasing hydrophilic gradient of wettability when receding from the control electrode 40. In this case, by slowly changing wettability of the first liquid 31 and the second liquid 32 to the hydrophobic surface 16 and the hydrophilic surface 17, a curvature of the interface 33 may be gradually changed according to a location.

The hydrophobic surface 16 may be formed in a protrusion and depression structure of a micrometer or nanometer scale, and the hydrophilic surface 17 may be produced with a method of making a hydroxyl group (-OH) at a wall surface of the first flow channel 11 through oxygen plasma processing.

The liquid lens of the foregoing first exemplary embodiment to sixth exemplary embodiment is characterized by using an insulating oil as an operation liquid (first liquid) and using an electrohydrodynamic flow.

Because the insulating oil is free from an evaporation problem and has much lower electrical conductivity than that of an aqueous solution, in the insulating oil, a flowing current is less and power consumption is much less. Further, because the insulating oil has a much lower freezing point and a much higher boiling point than that of an aqueous solution, even in an extreme situation in which outside temperature is very high or low, the insulating oil can stably operate. Further, the insulating oil has a wide selection width in selecting an operation liquid according to a density or a refractive index.

By using electrohydrodynamic flow, a component such as a motor or a membrane is not required and therefore an entire structure of a liquid lens is simplified and the liquid lens can be simply produced.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An electrohydrodynamic liquid lens, comprising:
a housing that forms a flow channel of a ring shape therein;
a first liquid that occupies a portion of the flow channel;
a second liquid that occupies the remaining portion of the flow channel and that maintains a separation state from the first liquid; and
a control electrode that contacts the first liquid in the flow channel,
wherein at an interface in which the first liquid and the second liquid contact, a curvature is formed to function as a lens, and
the control electrode causes an electrohydrodynamic flow of the first liquid to change a location of the interface.

2. The electrohydrodynamic liquid lens of claim 1, wherein wettability of the first liquid to the housing surface is different from wettability of the second liquid,
and a curvature of the interface increases as the wettability difference between the first liquid and the second liquid increases.

3. The electrohydrodynamic liquid lens of claim 1, wherein the control electrode comprises a first driving electrode and a second driving electrode that are located in parallel in a length direction of the flow channel and a pair of ground electrodes that are located in parallel in a width direction of the flow channel between the first second driving electrode and the second driving electrode, and
the first driving electrode and the second driving electrode and the pair of ground electrodes are disposed in a quadrangle.

4. The electrohydrodynamic liquid lens of claim 3, wherein any one of the first driving electrode and the second driving electrode receives application of a DC or AC voltage, and the other driving electrode maintains a floating state, and
the electrohydrodynamic flow of the first liquid occurs from a driving electrode in which a voltage is applied toward a driving electrode of a floating state.

5. The electrohydrodynamic liquid lens of any one of claims 1 to 4, wherein the flow channel is formed in a quadrangular ring shape, and
the first liquid occupies a half of the flow channel, and the second liquid occupies the remaining portion of the flow channel.

6. The electrohydrodynamic liquid lens of claim 5, wherein the flow channel comprises a pair of first flow channels at which the interface is located, and
the pair of first flow channels have a constant cross-sectional area in a length direction.

7. The electrohydrodynamic liquid lens of claim 5, wherein the flow channel comprises a pair of first flow channels at which the interface is located, and
the pair of first flow channels have a changing cross-sectional area in a length direction.

8. The electrohydrodynamic liquid lens of claim 5, wherein the flow channel comprises a pair of first flow channels at which the interface is located, and
a venturi passage is formed at the pair of first flow channels.

9. The electrohydrodynamic liquid lens of claim 5, wherein the flow channels comprise at least three first flow channels in parallel and having the same length, and
the interface is located at each of the first flow channels.

10. The electrohydrodynamic liquid lens of claim 9, wherein at least one of the first flow channels has a changing cross-sectional area in a length direction.

11. The electrohydrodynamic liquid lens of claim 5, wherein the flow channel comprises a pair of first flow channels at which the interface is located, and
a hydrophobic surface and a hydrophilic surface are formed at a wall surface of at least one first flow channel of the pair of first flow channels.

12. The electrohydrodynamic liquid lens of claim 11, wherein the hydrophobic surface and the hydrophilic surface form a hydrophobic gradient of wettability and a hydrophilic gradient of wettability, respectively, in a length direction of the first flow channel.

13. The electrohydrodynamic liquid lens of claim 1, wherein the first liquid comprises an insulating oil, and
the second liquid comprises any one of mineral oil, water, methanol, ethanol, isopropyl alcohol, and acetone.

14. The electrohydrodynamic liquid lens of claim 1, wherein a density of the first liquid is the same as that of the second liquid.
